# EUROPEAN PATENT APPLICATION

(11) **EP 1 434 395 A1**
(43) Date of publication of application: **30.06.2004**
(21) Application number: 02293245.3
(22) Date of filing: 26.12.2002
(51) Int. Cl.: H04L 12/56, H04L 12/28

(54) **Multiprotocol label switching label distribution method including a DSLAM and a BRAS**

(71) Applicant: ALCATEL, 75008 Paris (FR)
(72) Inventor: De Clercq, Jeremy, 9000 Gent (BE); Hublet, Christian Marie Adelin, 9280 Lochristi (BE)
(74) Representative: Plas, Axel

(57) **Abstract**

The present invention relates to a Label distribution method for distributing a label between a first Multiprotocol Label Switching network element and a second peering Multiprotocol Label Switching network element in a Multiprotocol Label Switching network. Such a label identifies the context of datapackets of a single flow, these datapackets being forwarded from the first Multiprotocol Label Switching network elements towards the second peering Multiprotocol Label Switching network element. The first Multiprotocol Label Switching network element adds an unused label to the first datapacket DP1 of the at least one datapacket of the single flow before the step of forwarding the at least one datapacket of the single flow. The second Multiprotocol Label Switching network element, subsequently retrieves from at least the first datapacket of of said single flow a context from higher layer information included in at least a first Multiprotocol Label Switching data-packet. The second Multiprotocol Label Switching network element then couples the unused label and the context retrieved from the higher layer information included in the first Multiprotocol Label Switching data-packet.

## Description

The present invention relates to a Label distribution method as described in the preamble of claim 1 and related Network Elements as described in the preamble of claims 3 and 5.

Such a method and related Network Elements are already known in the art, e.g. from *"Internet Engineering Task Force (IETF) Request for comments with title "Multiprotocol Label Switching Architecture" with reference RFC 3031" edited by E. Rosen of Cisco Systems, INC and published in January 2001".*

Therein, a Multiprotocol Label switching architecture, further referred to as MPLS architecture, is disclosed. Such an architecture comprises a packet-switched network built up of a plurality of interconnected Label Switch Routers wherein packet forwarding between two MPLS Label Switch Routers in this architecture is executed based on a label dedicated to each packet of a dataflow. A MPLS Label Switched Router will normally only be able to process MPLS packets that contain labels that it has distributed earlier to the sender of the packet. As such the receiving node knows what the label 'means', the label identifying the context, called the Forward Equivalence Class FEC, where the context is a representation of a group of packets that share the same requirements for their transport. All packets in such a group are provided the same treatment on the route to the destination. Such a context may be a destination, a Point-to-Point Protocol-session, a Virtual Private Network or an Internet Service Provider/network. Such a label used to forward traffic between and through the Label Switch Routers has to be agreed upon by both peering Label Switch Routers. This Agreement is achieved by using a procedure, called a signalled Label Distribution procedure, by which one Label Switch Router informs another peering Label Switch Router of label bindings it intends to make. This signalled Label Distribution procedure, by which Label Switch Routers distribute labels to support MPLS forwarding along normally routed paths may be implemented using a signalled label distribution via the Label distribution Protocol (LDP), or even different protocols, for instance the Resource Reservation Protocol with Extensions for Traffic Engineering (RSVP-TE) or the Border Gateway Protocol (BGP) as defined in RFC3107.

These Label distribution protocols require a number of signalling messages. In these protocols, there may be at first a label assignment request from an upstream Label switch Router to the Downstream Label switch Router and subsequently a label assignment as a reply of the Downstream Label switch Router to the upstream Label switch Router. The Downstream Label Switch Router may alternatively announce a Label for a Forward Equivalence Class FEC without explicit request from the Upstream Label Switch Router. This is called an 'unsolicited' label distribution with LDP.

Alternatively, the distribution of the labels may be performed by manual configuration of label-switching tables in each of the network elements. Of course this is not a cost-efficient solution due to the geographical distribution of the network elements involved in the update and because of the management effort required.

An object of the present invention is to provide a label distribution method and the related devices of the above known type but wherein the signalling involved in the label distribution is avoided.

According to the invention, this object is achieved by the label distribution method described in claim 1, the first Multiprotocol Label Switching Network Element as described in claim 3 and the second Multiprotocol Label Switching Network Element as described in claim 5.

Indeed, by retrieving by the second Network Element the context from the higher layer information included in at least the first Multiprotocol Label Switching data-packet of a single flow of datapackets that is received by the second network element and at the same time retrieving an unused label, added to the data packet by the first network element, from at least the first datapacket by the second Multiprotocol Label Switching network element, the label information including the context is distributed from the first Multiprotocol Label Switching network element towards the second Multiprotocol Label Switching network element. Herein, the unused label is a label that is not yet assigned to and used for identifying the context of datapackets of another flow. The subsequent packets of the single flow also carry the same label as the first datapacket of the single flow. After the retrieving of the unused label, the context from the higher layer information included in the first data-packet and the coupling of the two, the second network element knows that any subsequent datapacket carrying the unused label also carries the same context as the context retrieved from the higher layer information included in said first Multiprotocol Label Switching data-packet.

An additional characteristic feature of the present invention is described in claim 2 and claim 4.

By memorising, by the first network element, of a coupling between the context of the first datapacket DP1 of the single flow and the same unused label, the forwarding of data packets in a second direction, i.e. from the second Multiprotocol Label Switching network element towards the first Multiprotocol Label Switching network element, is enabled because the first network Element at reception of datapackets carrying the unused label is aware what the context of the packet is and to which flow it corresponds. Based on this knowledge the first Network element is able to handle the datapacket and determine an appropriate destination

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a part of a Multiprotocol Label Switching network MPLSN.
Fig. 2 represents the functional structure of a Digital Subscriber Line Access Multiplexer DSLAM and a Broadband Remote Access Server BRAS as presented in Fig.1.

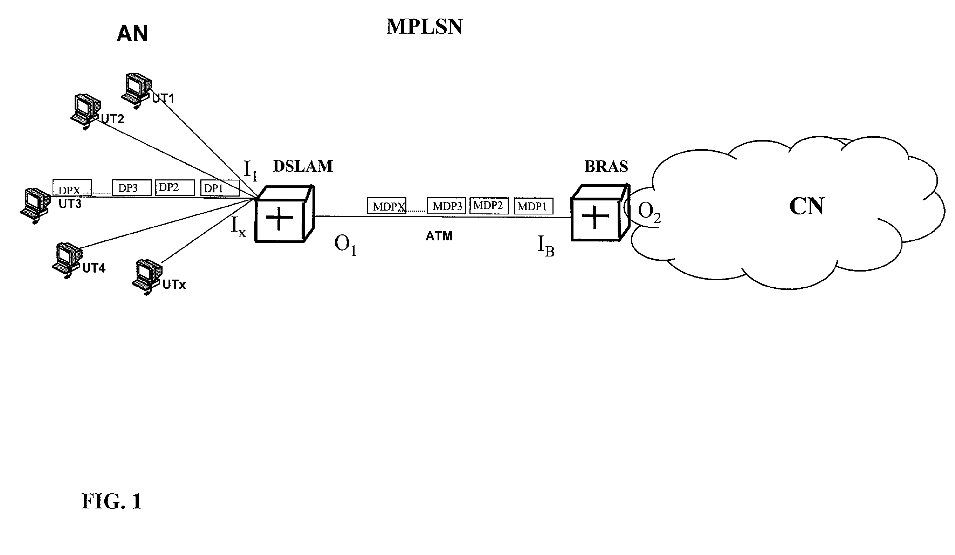

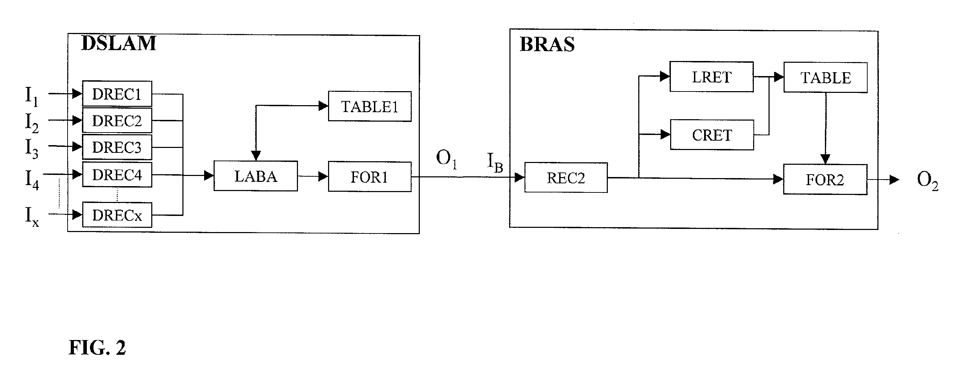

In the following paragraphs, referring to the drawings, an implementation of the label distribution method and the related Multiprotocol Label Switching Network Elements according to the present invention will be described. In the first paragraph of this description the main elements of the Multiprotocol Label Switching network MPLSN as presented in FIG. 1 are described. In the second paragraph, all connections between the before mentioned elements and described means are defined. Subsequently all relevant functional means of the mentioned network elements as presented in FIG.2 are described followed by a description of all interconnections. In the succeeding paragraph, the actual execution of the method for session establishment is described.

The essential elements of the present invention presented in a Multiprotocol Label Switching network MPLSN as presented in Fig.1 are the Access network AN including an Digital Subscriber Line Access Multiplexer DSLAM and a plurality of ADSL User terminals UT1, UT2, UT3, UT4...Utx, a Broadband Remote Access Server BRAS and a Core Network CN. The Digital Subscriber Line Access Multiplexer DSLAM forwards incoming data from a plurality of Asymmetric Digital subscriber lines via the Broadband Remote Access Server BRAS towards the core network and adds a label to the datapackets, identifying the context of the datapackets DP1 ..DPx of a single flow corresponding to for instance User Terminal UT3. Although there is usually a plurality of access networks, only one Access Network AN is described in this embodiment for reasons of simplicity. Further it is to be mentioned that although it is not mentioned or described that such an access network AN may comprise multiple an Digital Subscriber Line Access Multiplexers and multiple Broadband Remote Access Servers.

Each of the User terminals UT1...Utx is coupled to the Digital Subscriber Line Access Multiplexer DSLAM over an Asymmetric Digital Subscriber Line. It is assumed in this embodiment that a Point-to-point Protocol PPP connection is established between User Terminal UT3 and the Broadband Remote Access Server BRAS via the Digital Subscriber Line Access Multiplexer DSLAM and further that datapackets DP1 ..DPx are forwarded towards the Broadband Remote Access Server BRAS via the Digital Subscriber Line Access Multiplexer DSLAM over the PPP connection. The Digital Subscriber Line Access Multiplexer DSLAM is coupled to the Broadband Remote Access Server BRAS over an ATM connection. This connection alternatively may be implemented using (Gigabit) Ethernet, MPLS, point-to-point fibre or even the Internet protocol IP.

Further, the Broadband Remote Access Server BRAS couples the Access network AN to the Core Network CN which for instance may be the World Wide Web (Internet).

The functional built-up of the Broadband Remote Access Server BRAS and the Digital Subscriber Line Access Multiplexer DSLAM is presented in Fig.2.

The essential elements, for explanation of the present invention, of the Digital Subscriber Line Access Multiplexer DSLAM are a reception part DREC1, DREC2, DREC3, DREC4..DRECx for each corresponding Digital subscriber Line and User terminal UT1 .. Utx that are able to receive datapackets from the corresponding user-terminals UT1 ..Utx. and a label assigning part LABA that is able to assign a certain label, say Label A, to each of the datapackets DP1..DPx corresponding to one single flow (in this embodiment, datapackets DP1 ..DPx originate from User Terminal UT3 and the flow is the set of packets that originate the same userterminal UT3). Datapackets originating from another user terminal UT1 .. Utx are assigned a label identifying the originating user, or example Label B for packets originating from user terminal 1 and label C for packets originating from user terminal 2. Further, it is relevant that a label assigned to packets of a certain flow is a label that is not yet assigned to datapackets of another flow. The a label assigning part is also able to check first if the packets that come from a particular interface have already been assigned a label or not, if it is the case, they get this particular label; if it is not the case, they receive a new unused label.

The Digital Subscriber Line Access Multiplexer DSLAM further comprises a forwarding part FOR1 which is adapted to at first encapsulate the datapackets In Multiprotocol Label Switching datapackets and forward these Multiprotocol Label Switching data packets DP1..DPx of the single flow towards the Broadband Remote Access Server BRAS. The coupling adopting part TABLE1 is able to adopt and hold a coupling between the context of the first datapacket (DPI) of a single flow to be sent out and the unused label assigned to the first datapacket of a dataflow to be sent out. This coupling is necessary for forwarding data packets in a second direction from the Broadband Remote Access Server BRAS via the Digital Subscriber Line Access Multiplexer DSLAM towards the user terminals UT1..UTx. The coupling further is necessary in order to make sure that all packets from the same User Terminal get the same label.

In this embodiment it is assumed that these data-packets DP1..DPx are Point-to-point Protocol PPP packets and that the label assigning part LABA assigns a label to each of the datapackets DP1..DPx originating from user terminal UT3.

Each Reception Part DREC1, DREC2, DREC3, DREC4..DRECx has an input-terminal that is at the same time an input-terminal I₁, I2, I₃, I₄ .. Iₓ of the Digital Subscriber Line Access Multiplexer DSLAM and each having an output-terminal that is coupled to an input-terminal of the label assigning part LABA. The label assigning part LABA, has an output-terminal that is coupled with an input-terminal of the forwarding part FOR1. The forwarding part has an output-terminal that is at the same time an output-terminal O₁ of the Digital Subscriber Line Access Multiplexer DSLAM. The coupling adopting part TABLE1 is coupled with an input to an output of the label assigning part LABA.

The essential elements, for explanation of the present invention, of the Broadband Remote Access Server BRAS are a reception part REC2 that is adapted to receive the Multiprotocol Label Switching datapackets MDP1 .....MDPx of the single flow forwarded by the Digital Subscriber Line Access Multiplexer and to decapsulate these datapackets and a label retrieving part LRET that is adapted to retrieve from these decapsulated datapackets DP1..DPx the label included in the datapackets.

The Broadband Remote Access Server BRAS further comprises a context retrieving part CRET that is able to retrieve from at least the first datapacket of these datapackets DP1..DPx the context from higher layer information included in the data-packet DP1 and a holding part TABLE, that is able make the coupling of the retrieved label and the retrieved context and to hold a this label coupled together with the context retrieved from the first datapacket DP1.

The Reception Part REC2 has an input-terminal that is at the same time an input-terminal I_{B} of the Broadband Remote Access Server BRAS and has an output-terminal that is coupled to an input-terminal of the label retrieving part LRET and at he same time coupled to an input-terminal of the context retrieving part CRET. The holding part TABLE is coupled with an input to an output of both the label retrieving part LRET and the context retrieving part CRET. Further, the holding part TABLE has an output-terminal that is coupled to an input-terminal of the Forwarding Part FOR2. Additionally there is a coupling between the receiving part REC2 and the forwarding part FOR2. The forwarding part FOR2 has an output-terminal that is at the same time an output-terminal O₂ of the Broadband Remote Access Server BRAS.

In order to explain the execution of the present invention it is assumed that a point-to-point protocol PPP connection is established between the user terminal UT3 and the Broadband Remote Access Server BRAS via the Digital Subscriber Line Access Multiplexer DSLAM using an ADSL line and the ATM connection. User terminal UT3 forwards datapackets DP1..DPx towards the Digital Subscriber Line Access Multiplexer DSLAM. The receiving part DREC3 receives these packets DP1..DPx and subsequently forwards these packets to the label assigning part LABA that assigns a Label A to each of these datapackets DP1..DPx of this flow. Upon receipt of the first data-packet from a certain user terminal, the label assigning part LABA of the Digital Subscriber Line Access Multiplexer DSLAM assigns an unused label, which is a label not yet assigned to a datapacket of a dataflow. [For each other Input-terminal, different label identifying the input-terminal and as a consequence the User Terminal, will be chosen]. The datapackets DP1..DPx including the label A are directed towards the forwarding part FOR1, that encapsulates each of the PPP datapackets DP1..DPx in corresponding MPLS datapackets MDP1...MDPx and subsequently forwards the MPLS datapackets MDP1...MDPx over the connection towards the Broadband Remote Access Server BRAS. The reception part REC2 of the Broadband Remote Access Server BRAS receives these MPLS datapackets MDP1..MDPx and subsequently decapsulates them. The included PPP datapackets are directed to the forwarding part FOR2. In the mean time the label retrieving part LRET, retrieves from each of the datapackets DP1..DPx of the single flow the label A that is included therein. Moreover the context retrieving part CRET checks the first PPP datapacket DP1 and retrieves the context that is present in the higher layer information included in the PPP data-packet (DP1 ). In this case the context is that the datapackets of the flow originate at a certain application of User Terminal UT3. The holding part TABLE, that first makes the coupling of the retrieved label and the retrieved context and secondly hold this label coupled together with the context retrieved from the first datapacket DP1.

For each subsequent datapacket DP2..DPx, also containing the same label, label A the Broadband Remote Access Server BRAS recognises that each of these packets belongs to the same flow as datapacket DP1 and it originates from a PPP connection at user terminal UT3.

It is to be noticed that the label enables the differentiation between the different user terminal sessions sending datapackets towards the Digital Subscriber Line Access Multiplexer DSLAM. Datapackets of each different flow, each originating at a different User Terminal UT1..Utx will be assigned a different label. These different labels facilitate the Digital Subscriber Line Access Multiplexer DSLAM and the Broadband Remote Access Server BRAS to distinguish between the datapackets of the different dataflows and corresponding User Terminals.

Additionally it is possible that the Broadband Remote Access Server BRAS sends datapackets towards the Digital Subscriber Line Access Multiplexer DSLAM with as destination the User Terminal UT3. In order to address this User Terminal UT3, the Broadband Remote Access Server BRAS includes the label A, still belonging to User Terminal UT3, in the datapackets. At reception of these datapackets by the Digital Subscriber Line Access Multiplexer DSLAM, the Digital Subscriber Line Access Multiplexer DSLAM checks the coupling holding part TABLE1, for Label A. The coupling holding part TABLE1 holds an entry for Label A which contains the corresponding context, which is Input 13 corresponding to User Terminal UT3 here. The Digital Subscriber Line Access Multiplexer DSLAM then forwards all incoming packets, originating at the Broadband Remote Access Server BRAS, and containing label A, via input terminal 13 towards User terminal UT3. For other flows originating at another user terminal and belonging input an entry in the coupling holding part will be made that identifies the originating user terminal.

It is to be remarked that although the present invention is described in the context of an access network coupling to the internet via a Digital Subscriber Line Access Multiplexer DSLAM and a Broadband Remote Access Server BRAS, the present invention alternatively may be applied in a core network where the first and second MPLS network elements may be implemented using corresponding Label Edge Routers or Label Switch Routers.

Another embodiment in the same scenario (Digital Subscriber Line Access Multiplexer DSLAM - Broadband Remote Access Server BRAS ) but where PPP is not used. In that case, the context can be retrieved from the source IP address from the IP packets carried in the MPLS frames (the protocol stack is here IP over MPLS, instead of PPP). Thus, for packets arriving from the Digital Subscriber Line Access Multiplexer DSLAM at the Broadband Remote Access Server BRAS , the Broadband Remote Access Server BRAS will look at the source IP address (IP@X), and as such make the binding between the newly received label A and that IP address IP@X. As such, for IP packets that arrive from the core networks to the Broadband Remote Access Server BRAS that have a destination IP address IP@X, the Broadband Remote Access Server BRAS knows that it should use label A and send the packets to the Digital Subscriber Line Access Multiplexer DSLAM . The Digital Subscriber Line Access Multiplexer DSLAM knows that when it receives packets from the Broadband Remote Access Server BRAS with this label, it should send the packets towards User Terminal UT3.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Label distribution method for distributing a label between a first Multiprotocol Label Switching network element (DSLAM) and a second peering Multiprotocol Label Switching network element (BRAS) in a Multiprotocol Label Switching network (MPLSN), said label identifying a context of a single flow of data-packets (DP1..DPx) , forwarded from said first Multiprotocol Label Switching network element (DSLAM) towards said second peering Multiprotocol Label Switching network element (BRAS), **CHARACTERISED IN THAT** said method comprises the steps of:
a. said first Multiprotocol Label Switching network element (DSLAM) adding an unused label to a first datapacket DP1 of said single flow before the step of forwarding said at least one datapacket (DP1..DPx) of said single flow;
b. said second Multiprotocol Label Switching network element (BRAS), retrieving from at least said first datapacket (DP1) of said single Flow a context from higher layer information included in at least said first Multiprotocol Label Switching data-packet (DP1);
c. said second Multiprotocol Label Switching network element (BRAS) coupling said unused label and said context retrieved from said higher layer information included in at least said first Multiprotocol Label Switching data-packet (DP1).

2. Label distribution method according to claim 1, **CHARACTERISED IN THAT** said method further comprises the step of said first Multiprotocol Label Switching network element (DSLAM) memorising said coupling between said context of at least said first datapacket DP1 of said single flow and said unused label.

3. First Multiprotocol Label Switching Network Element (DSLAM) for use in a Multiprotocol Label Switching network (MPLSN), wherein a label is distributed between said first Multiprotocol Label Switching network element (DSLAM) and a second peering Multiprotocol Label Switching network element (BRAS) in said Multiprotocol Label Switching network (MPLSN), said label identifying a context of a single flow of datapackets, forwarded from said first Multiprotocol Label Switching network elements (DSLAM) towards said second peering Multiprotocol Label Switching network element (BRAS), said first Multiprotocol Label Switching Network Element (DSLAM) comprising a forwarding part (FOR1), adapted to forward said single flow of Multiprotocol Label Switching data packet (DP1 ..DPx) from said first Multiprotocol Label Switching Network element (DSLAM) towards said second Multiprotocol Label Switching network element (BRAS), **CHARACTERISED IN THAT** said first Multiprotocol Label Switching Network Element (DSLAM) further comprises a label assigning part (LABA), coupled with an output to an input of said forwarding part (FOR1) and adapted to assign an unused label to said single flow of datapackets (DP1 ..DPx).

4. First Multiprotocol Label Switching Network Element (DSLAM) according to claim 3, **CHARACTERISED IN THAT** said first Multiprotocol Label Switching Network Element (DSLAM) further comprises a memorising part (TABLE1), coupled with an input to an output of said label assigning part (LABA) and adapted to memorise a coupling between said context of said single flowof datapackets and said unused label.

5. Second Multiprotocol Label Switching Network Element (BRAS) for use in a Multiprotocol Label Switching network (MPLSN), wherein a label is distributed between a first Multiprotocol Label Switching network element (DSLAM) and said second peering Multiprotocol Label Switching network element (BRAS) in said Multiprotocol Label Switching network (MPLSN), said label identifying a context of a single flow of datapackets (DP1..DPx), forwarded from said first Multiprotocol Label Switching network element (DSLAM) towards said second peering Multiprotocol Label Switching network element (BRAS), said second Multiprotocol Label Switching Network Element (BRAS) comprising the following parts:
a. a reception part (REC2), adapted to receive said single flow of datapackets (DP1..DPx); and
b. a label retrieving part (LRET), coupled with an output to an input of said reception part (REC2) and adapted to retrieve from at least said first datapacket (DP1) of said single flow of datapackets (DP1..DPx) an unused label included therein, **CHARACTERISED IN THAT** said Multiprotocol Label Switching Network Element (BRAS) further comprises:
c. a context retrieving part (CRET), coupled with an output to an input of said reception part (REC2) and adapted to retrieve from at least said first datapacket (DP1) of said single flow of datapackets (DP1..DPx) a context from higher layer information included in at least said first data-packet (DP1 ); and
d. a holding part (TABLE), coupled with an input to an output of both said label retrieving part (LRET) context retrieving part (CRET) and adapted to hold a coupling of said unused label and said context retrieved from said higher layer information included in at least said first Multiprotocol Label Switching data-packet (DP1).
